Europäisches Patentamt

European Patent Office

Office européen des brevets

(19)

(11) Veröffentlichungsnummer: **0 023 354**
**B1**

(12) # EUROPÄISCHE PATENTSCHRIFT

(45) Veröffentlichungstag der Patentschrift:
**18.05.83**

(51) Int. Cl.³: **G 01 J 5/34,** G 08 B 13/18

(21) Anmeldenummer: **80104398.5**

(22) Anmeldetag: **25.07.80**

(54) **Pyrodetektor.**

(30) Priorität: **27.07.79 DE 2930632**

(43) Veröffentlichungstag der Anmeldung:
**04.02.81 Patentblatt 81/5**

(45) Bekanntmachung des Hinweises auf die Patenterteilung:
**18.05.83 Patentblatt 83/20**

(84) Benannte Vertragsstaaten:
**AT BE CH DE FR GB IT LI NL SE**

(56) Entgegenhaltungen:
**DE-A-2 152 372**
**FR-A-2 043 015**
**FR-A-2 282 628**
**GB-A-1 447 372**
**GB-A-1 464 555**
**US-A-3 453 432**
**US-A-3 842 276**
**US-A-3 877 308**
**US-A-4 110 616**

**,,Elektronik'', vol. 21, Nr. 6, Juni 1972, München,
DE H. Siebert ,,Pyroelektrische Strahlungsdetektoren'', S. 217-219.**

(73) Patentinhaber: **SIEMENS AKTIENGESELLSCHAFT,
Berlin und München Wittelsbacherplatz 2,
D-8000 München 2 (DE)**

(72) Erfinder: **Kleinschmidt, Peter, Dipl.-Phys, Klagenfurter
Strasse 12, D-8000 München 80 (DE)**

ACTORUM AG

Pyrodetektor

Die Erfindung bezieht sich auf einen Pyrodetektor, wie er im Oberbegriff des Patentanspruchs 1 angegeben ist.

Ein mit dem Anmeldungsgegenstand vergleichbarer Pyrodetektor ist aus der US-PS Nr. 2855492 bekannt. Dieser Pyrodetektor ist jedoch ein Gerät zur quantitativen Messung der Intensität einer Wärmestrahlung, auch als Bolometer bezeichnet. Dieses Gerät hat in einem mit einer Abdeckung versehenen Hohlspiegel zwei Thermosensoren, von denen der eine Thermosensor im Fokus des Spiegels angeordnet ist. Der zweite Thermosensor ist ausserhalb des Fokus angeordnet und dient dort der Kompensation von Umgebungseinflüssen, die auf das Messergebnis einwirken, nämlich zur Kompensation von Änderungen der Temperatur. Die beiden Thermosensoren sind temperaturempfindliche elektrische Widerstände, die in einer Wheatstone-Brücke geschaltet sind. Wie in der US-Patentschrift mehrfach ausdrücklich angegeben, muss der zur Kompensation vorgesehene Widerstandsthermosensor dort derart eingebaut sein, dass er gegenüber der Strahlung isoliert ist, der der eigentliche im Fokus angeordnete Messwiderstand ausgesetzt ist. Wie in den betreffenden Figuren der genannten US-Patentschrift dargestellt, sind dort jeweilige Abschirmungen 29, 30, 31 vorgesehen, die den weiteren, der Kompensation dienenden Thermosensor 7 gegenüber derjenigen Wärmestrahlung der Abdeckung 21 abschirmen, die jedoch auf den im Fokus angebrachten Thermosensor 6 einwirkt.

Bei einer Anordnung nach der US-Patentschrift hat eine aus der Umgebung des Detektors auf die Abdeckung treffende Wärmestrahlung sehr nachteiligen Einfluss, da die dadurch von der Abdekung wiederum ausgehende, in das Innere des Hohlspiegels eintretende Wärmestrahlung die beiden Thermosensoren 6, 7 in ganz ungleichem Masse trifft und somit ungleich mit Wärmestrahlung beaufschlagt, die von ganz anderen Orten und Körpern herrührt als dem Messobjekt. Dies ist insbesondere ganz besonders gravierend, wenn das Messobjekt selbst nur in schwachem Masse Strahlung aussendet. Dieser Umstand macht ein solches bekanntes Bolometer für Zwecke einer Detektion in einem scharf begrenzten Richtungsbereich in grösserer Entfernung befindlicher Körper bei anderen ausserhalb des Richtungsbereiches, aber in der Nähe befindlichen, nicht zu detektierenden Körpern ungeeignet.

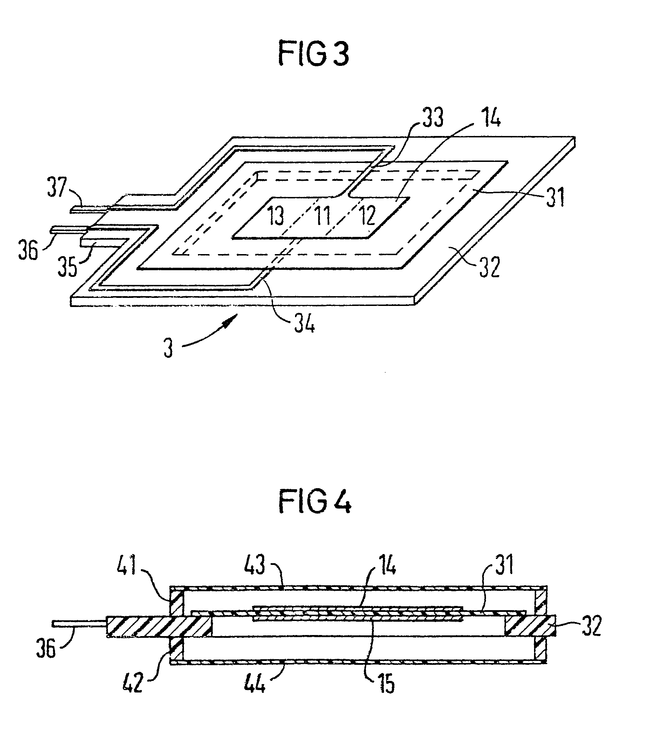

Aus der US-PS Nr. 3932753 ist eine pyroelektrische Einrichtung mit koplanaren Elektroden bekannt, die als Thermosensor ein Material mit einer polaren Kristallachse c verwendet, das z.B. Lithiumniobat ist. In dieser Patentschrift ist im wesentlichen die auf einer Oberflächenseite als Elektrodenpaar vorgesehene Anbringung der Elektroden in bezug auf die polare Achse erörtert. Nur im weiteren ist dort angegeben, zwei differentielle Detektorelemente (insbesondere Fig. 4) vorzusehen, mit denen eine Strahlung ($R_1$), die auf der einen Seite einfällt, mit einer Strahlung ($R_2$), die auf der anderen Seite einfällt, verglichen werden kann. Dabei kann die von dem einen Elektrodenpaar aufgenommene Strahlung allein die Untergrundstrahlung sein, die als Referenzsignale verwendet werden kann.

Ein spezieller Einbau eines solchen Thermosensors in einem Hohlspiegel und Probleme, die sich aus der notwendigen Selektion in den Hohlspiegel insgesamt gelangender Wärmestrahlung ergeben, sind dort nicht erörtert.

Aus der GB-PS Nr. 1447372 ist ein Thermosensor bekannt, der relativ unempfindlich gegen Änderungen der Umgebungstemperatur sein soll. Er arbeitet mit einem differentiellen Ausgangssignal zweier, vor einem konkaven Spiegel angeordneter Sensorelemente aus pyroelektrischem Material, die auf Infrarotstrahlung ansprechen. Diese beiden Sensorelemente befinden sich in jeweils einem Brennpunkt dieses Spiegels. Der Spiegel selbst ist ein flacher Spiegel mit weit ausserhalb desselben liegenden Brennpunkten — wie insbesondere der zugehörigen Figur zu entnehmen ist — in denen sich diese Sensorelemente befinden. Der Aufbau dieses aus der britischen Patentschrift bekannten Thermosensors ist so gewählt, dass er als Detektor für das Feststellen eines Einbrechers dient. Bei diesem Aufbau hängt das differentielle Detektorsignal davon ab, dass sich dieser zu detektierende Einbrecher bewegt, und zwar mit einer Komponente quer zur Achse des Spiegels. Infolge dieser Bewegungskomponente tritt eine zeitliche Veränderung der Detektorsignale in den einzelnen Sensorelementen auf, die deshalb in einem jeweiligen Brennpunkt angeordnet sind. Das Differenzprinzip wird hier somit zum Erkennen einer Bewegungskomponente angewendet. Die dort vorgesehenen Sensorelemente können Anteile ein und desselben Körpers aus pyroelektrischem Material sein, wie dies die Fig. 3 und 4 zeigen.

Aus der US-PS Nr. 3877308 ist ein weiterer, einstückig aufgebauter Sensor mit zwei Sensorelementen bekannt, zu denen Schaltungsbeispiele angegeben sind. Zu einem für eine spezielle Aufgabe des Sensors angepassten Aufbau oder Einbau in einem kompletten Gerät sind in dieser Druckschrift jedoch keine relevanten Angaben gemacht. Es wird aber für den Sensor die Verwendung von PVDF-Material und von Bleizirkonattitanat als pyroelektrische Materialien genannt. Die angegebenen Schaltungen beziehen sich darauf, Signaldifferenzbildungen zur Kompensation von Umgebungstemperatureinflüssen zu erreichen, wobei ausser acht gelassen ist, woher im Einzelfall der Umgebungstemperatureinfluss herrührt.

Ein Sensor nach der US-PS Nr. 3877308 kann auch im Detektor der vorgenannten GB-PS Nr. 1447372 verwendet werden, womit sich jedoch an der Funktion dieses Detektors nach der britischen Patentschrift, nämlich zur differentiellen Detektion einer Bewegungskomponente, nichts ändert.

Aus „Elektronik" (1972), Heft 6, S. 217-219, sind allgemeine Angaben über pyroelektrische Strahlungsdetektoren bekannt, in denen ferroelektrische Kristalle, wie z.B. Titanate, genannt werden. Über die voranstehend erörterten Druckschriften hinausgehende besondere Einzelheiten sind nicht enthalten.

Aus der US-PS Nr. 3842276 ist ein weiterer Thermodetektor bekannt, der ebenfalls zum Erkennen einer Richtungsänderung einfallender Wärmestrahlung ausgebildet ist und hierzu ein vor dem Sensor angebrachtes Streifengitter als notwendigen Bestandteil hat. Der Sensor besteht aus Sensorelementstreifen, die parallel zum vorgenannten Gitter ausgerichtet sein müssen. Die Sensorelemente sind alle in Reihe geschaltet und es ist nur ein einziges Ausgangssignal zu erhalten, so dass eine Differenzbildung nicht in Frage kommt.

Für wiederum einen anderen Zweck ist ein in der DE-PS Nr. 2137848 beschriebenes Strahlungsmessgerät bekannt, das zur Fernanzeige der Oberflächentemperatur eines entfernt angeordneten Messobjekts bestimmt ist. Dieses Messgerät arbeitet mit zwei Kaltleitern, d.h. keramischen PTC-Widerständen, die voneinander unterschiedliche Curie-Temperatur haben müssen und deren sich nicht deckende Kennlinien wenigstens im Messbereich dennoch gleiche Steilheit haben müssen. Einer dieser Kaltleiter ist in einem Brennpunkt des vorgesehenen Spiegels angeordnet. Der andere Kaltleiter ist so angeordnet, dass er in einer zusätzlich vorgesehenen Brückenschaltung eine Kompensation des die Temperatur quantitativ messenden Kaltleiters, d.h. eine Nullpunkt-Korrektur, bewirkt.

Lediglich der Vollständigkeit halber sei ein Pyrodetektor der Fa. Heimann, Wiesbaden, genannt, bei dem sich im Brennpunkt eines Hohlspiegels ein temperaturempfindliches Element befindet. Ein Kompensationselement wie bei den vorangehend beschriebenen bekannten Detektoren ist dort nicht vorgesehen. Eine Besonderheit dieses Pyrodetektors ist die Verwendung einer Abdeckung bestehend aus einer Germaniumscheibe, die eine Vielzahl von Aufdampfschichten hat, und mit der sichtbare Strahlung und Strahlung des nahen Ultrarots weggefiltert wird.

Aufgabe der vorliegenden Erfindung ist es, einen mit möglichst einfachen technischen Mitteln aufgebauten Pyrodetektor anzugeben, der eine qualititative Änderung des Wertes einer in diesen Detektor aus einem vorgegebenen, scharf begrenzten Richtungsbereich von einem entfernten Ort ausgehenden Wärmestrahlung angibt, von der ein ohnehin nur sehr geringer Anteil in den Pyrodetektor eintritt, wobei dieser Detektor auf insbesondere plötzliche Erwärmung seines Eintrittsfensters nicht ansprechen darf und nur solche Wärmeänderungen erfassen soll, die mit Zeitkonstanten kleiner als 10 s auftreten. Insbesondere soll der für den anzugebenden Pyrodetektor notwendige technische Aufwand — jedoch ohne Einbusse an Detektorzuverlässigkeit — gering gehalten sein, damit dieser Detektor für viele Anwendungsfälle, z.B. auch als Türöffnersensor, wirtschaftlich verwendbar ist. Aufgabe einer Weiterbildung der Erfindung ist es, den erfindungsgemässen Pyrodetektor mit einfachen Mitteln so auszubilden, dass er erst für einen Frequenzbereich mit einer Strahlungswellenlänge grösser als 5 µm empfindlich ist und auf sichtbares Licht und nahes Ultrarot nicht anspricht.

Diese Aufgabe wird für einen Pyrodetektor gemäss dem Oberbegriff erfindungsgemäss entsprechend den Merkmalen des Kennzeichens des Patentanspruches 1 gelöst.

Der Sensor besteht aus wenigstens zwei Sensorelementen. Das Grundprinzip des erfindungsgemässen Pyrodetektors liegt — über die Verwendung der Merkmale des Oberbegriffes des Patentanspruches 1 hinausgehend — darin, die Folie mit den Sensorelementen, von denen das erste Element im Fokus angeordnet ist, von beiden Seiten mit der aus entferntem Bereich gerichtet und fokussiert eingefallenen Ultrarotstrahlung zu beaufschlagen. Das eine weitere oder alle weiteren Sensorelemente sind ausserhalb des Fokus des Spiegels angeordnet. Dort werden diese weiteren Elemente von der aus der Nähe des Spiegels in diesen einfallenden Strahlung beaufschlagt. Insbesondere handelt es sich dabei um die von der vorgesehenen Abdeckung des Spiegels und/oder der Sensorelemente ausgehenden Strahlung. Das im Fokus angeordnete Sensorelement wird von dieser Strahlung gleichermassen wie die weiteren Sensorelemente beaufschlagt.

Als Material mit insbesondere einprägbarer permanenter Orientierungspolarisation ist für einen erfindungsgemässen Pyrodetektor bevorzugt eine Folie aus Polyvinylidendifluorid (PVDF) oder aus ferroelektrischer Keramik vorgesehen.

Bei einer Ausführungsform mit mehreren weiteren Sensorelementen empfiehlt es sich, diese verteilt im Bereich ausserhalb des Fokus anzuordnen.

Die einzelnen Sensorelemente sind einzelne Bereiche der Folie. Insbesondere können die Elektroden dieser einzelnen Bereiche je eine auf den beiden Flächen der Folie ausgebildete gemeinsame Elektroden sein. Je nach Elektrodenkonfiguration genügt es dann, insbesondere nur noch einen einzigen gemeinsamen Abschlusswiderstand für die einzelnen Sensorelemente vorzusehen, obwohl der elektrischen Funktion nach im erfindungsgemässen Pyrodetektor eine Differenzbildung, nämlich die Differenz des Ausgangssignals des ersten Sensorelementes einerseits und des einen oder der mehreren weiteren Elemente andererseits, das Detektorausgangssignal bildet. Erreicht wird dies durch eine gemäss Weiterbildungen vorgesehene unterschiedliche eingeprägte permanente Orientierungspolarisation in dieser einen Folie. Bezüglich Einzelheiten sei hier auf die Erläuterungen zu Ausführungsbeispielen verwiesen.

Wichtige Ausführungsformen der Erfindung betreffen die Wahl des Materials und/oder der Ausführungsform der erfindungsgemäss vorgesehenen Abdeckung. Günstig ist es, für diese Abdeckung eine Folie aus Polyäthylen zu verwenden, und zwar insbesondere eine solche aus wie handelsüblichem, lichtundurchlässig gefärbtem Polyäthylen. Dieses gefärbte Polyäthylen ist ultrarotdurchlässig und weist keine wesentliche Absorption der zu detektierenden Ultrarotwärmestrahlung auf. Für diese Abdeckung, die durch aus dem Nahbereich des Pyrodetektors auffallende, nicht zu detektierende Ultrarotstrahlung erwärmt wird, ist ein Abstand vom Sensor einzuhalten, der so bemessen ist, dass eine Wärmeeinwirkung, ausgehend von dieser Abdeckung, wenigstens im wesentlichen gleichmässig auf das im Fokus des Spiegels angebrachte erste Sensorelement und den oder die ausserhalb des Fokus angebrachten weiteren Sensorelemente einwirkt.

Zur Filterung insbesondere auch aus dem zu detektierenden Fernbereich einfallender Lichtstrahlung und/oder kurzwelliger Infrarotstrahlung mit Wellenlängen von insbesondere weniger als 5 µm ist es gemäss einer Ausgestaltung vorteilhaft, die Oberfläche der Abdeckung, d.h. der sie bildenden Folie, aufzurauhen. Bei einer Rauhtiefe von z.B. 2 bis 5 µm wird Strahlung mit Wellenlängen kürzer als etwa 5 µm und insbesondere Lichtstrahlung stark gestreut, nämlich so, als wäre die Abdeckung die Quelle dieser Strahlung. Wie in der Nähe der Abdeckung zum Spiegel wirkt dann diese Strahlung jedoch in der gleichen Weise — wie vorangehend zur Wärmestrahlung der Abdeckung beschrieben — gleichermassen auf den ersten und die weiteren Sensorelemente und wird erfindungsgemäss nicht detektiert.

Die für die Abdeckung erwähnte Aufrauhung kann ersatzweise und/oder zusätzlich auch auf der Oberfläche des vorhandenen Spiegels mit der prinzipiell gleichen Wirkung vorgesehen sind.

Bei der Verwendung von Polyvinylidendifluorid (PVDF) als Folienmaterial, d.h. als Material mit pyroelektrischem Effekt für die Sensorelemente, kann vorteilhafterweise ein im Zusammenhang mit der Erfindung entdeckter Effekt ausgenutzt werden, der darin besteht, dass das PVDF-Material im Bereich von 7 bis 20 µm eine grosse Strahlungsabsorption aufweist, wohingegen das Material für kürzerwellige Strahlung weitgehend bis völlig durchlässig ist. Verwendet man bei Sensorelementen aus PVDF-Folie für Strahlung kurzwelliger als wenigstens ca. 5 µm strahlungsdurchlässige Elektroden, so kann man bei diesen Ausführungsformen erreichen, dass einerseits die auszuwertende langwellige Strahlung zwischen 7 und 10 µm im Material der Folie absorbiert wird. Die kurzwelligere Strahlung (auf die der Pyrodetektor nicht ansprechen soll) kann entsprechend dieser Ausführungsform durch die Folie direkt hindurchtreten, so dass sie die Folie wieder verlässt. Für eine solche durchsichtige Elektrode eignet sich eine aufgesputterte Schicht aus ZnO sowie auch eine Silberschicht mit etwa 10-100 nm Dicke.

Strahlungseinfall auf beiden Seiten der Folie begünstigt, eine möglichst geringe Zeitkonstante für das Ansprechen des erfindungsgemässen Pyrodetektors zu erreichen.

Weitere Erläuterungen zur Erfindung gehen aus der nachfolgend, anhand der Figuren gegebenen Beschreibung zu Ausführungsbeispielen hervor. Es zeigen:

Fig. 1 eine erste Ausführungsform eines erfindungsgemässen Pyrodetektors in einer Gesamtansicht;

Fig. 2 eine Detaildarstellung einer Ausführungsform eines im Detektor nach Fig. 1 vorgesehenen Sensors;

Fig. 3 einen mechanischen Aufbau eines Sensors, wobei dieser Aufbau insbesondere für eine Ausführungsform mit Folie geeignet ist;

Fig. 4 eine Seitenansicht des Sensors nach Fig. 3 mit zusätzlicher Abdeckung;

Fig. 5 ein Prinzipschaltbild zur Erläuterung der Merkmale der Elektronik eines erfindungsgemässen Pyrodetektors;

Fig. 6 für einen Sensor eines erfindungsgemässen Pyrodetektors ein erstes elektrisches Schaltungsprinzip;

Fig. 7 für einen Sensor eines erfindungsgemässen Pyrodetektors ein zweites elektrisches Schaltungsprinzip;

Fig. 8 für einen Sensor eines erfindungsgemässen Pyrodetektors ein drittes elektrisches Schaltungsprinzip; und

Fig. 9 und 10 Ausführungsformen für vorteilhafte Abdeckungen.

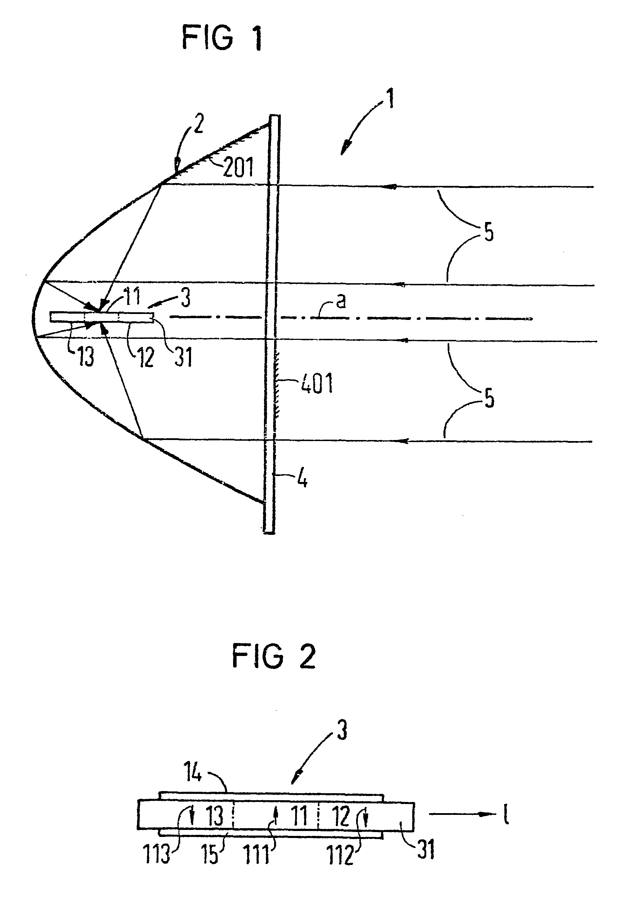

Fig. 1 zeigt eine Prinzipdarstellung eines erfindungsgemässen Pyrodetektors 1 mit einem parabolischen Reflektor 2 und dem Sensor 3. Mit einer Abdeckung 4 ist der Sensor 3 und vorzugsweise das ganze Innere des Spiegels abgedeckt, und zwar sowohl gegen Beschädigung als auch gegen Luftzug von aussen, dessen Temperatur bzw. dessen sich ändernde Temperatur die ordnungsgemässe Detektion des erfindungsgemässen Pyrodetektors 1 beeinträchtigen würde. Mit 5 ist eine von einem entfernten Ort ausgehende, in den Spiegel 2 einfallende Ultrarotstrahlung bezeichnet. Entfernter Ort ist hier im Sinne der Erfindung so zu verstehen, dass die vom Spiegel 2 gerechnete Entfernung des Ortes, an dem sich der die zu detektierende Wärmestrahlung aussendende Körper befindet, gross gegenüber den Abmessungen des Spiegels 2 ist, so dass die einfallende Strahlung als im wesentlichen parallele Strahlung betrachtet werden kann, die im Spiegelbrennpunkt fokussiert wird. Sonstige, vor allem aus der näheren Umgebung des Spiegels 2 einfallende Wärmestrahlung — soweit sie nicht schon durch die Filterwirkung der Abdeckung 4 absorbiert wird — fällt aus allen Richtungen in das Innere des Spiegels 2 ein und erfährt auf jeden Fall keine Konzentration im Brennpunkt.

Für eine Unempfindlichkeit gegen insbesondere Lichtstrahlung können der Spiegel 2 und/oder die Abdeckung 4, wie stückweise mit 201 und 401 angedeutet, aufgerauht sein, wie dies schon oben erörtert ist. Die mit 5 bezeichnete Strahlung deutet somit den scharf begrenzten Richtungsbereich der Detektionsempfindlichkeit des erfindungsgemässen Pyrodetektors an. Strahlung in diesem Richtungsbereich wird bekanntermassen im Brennpunkt des Parabolspiegels 2 konzentriert. Am Ort des Brennpunkts befindet sich ein Element 11 des wärmeempfindlichen Sensors 3. Dieses hat hier aber lediglich die Funktion, Änderungen der Intensität der einfallenden Strahlung 5 qualitativ festzustellen. Um jedoch zwischen Intensitätsänderungen der Strahlung 5 und Intensitätsänderungen von aus sonstigen Richtungen, insbesondere aus dem Nahbereich und vor allem von der Abdeckung 4 ausgehender, in den Spiegel 2 einfallender Strahlung zu unterscheiden, sind ein oder mehrere weitere Sensorelemente 12, 13 vorgesehen.

Der besseren Übersichtlichkeit halber ist der in Fig. 1 in seiner Gesamtheit mit 3 bezeichnete Sensor in Fig. 2 in vergrössertem Massstab wiedergegeben. Gemäss einem Merkmal der Erfindung ist dieser Sensor 3 eine Folie 31 aus beispielsweise ferroelektrischem Bariumtitanat, Bleizirkonattitanat oder aus PVDF-Folie.

Die Folie 31 ist bei der dargestellten Ausführungsform in beispielsweise drei Anteile für die Sensorelemente 11, 12 und 13 aufgeteilt, von denen der Anteil 11 eine Richtung der Orientierungspolarisation 111 hat, die der Richtung der Orientierungspolarisation 112 und 113 der anderen Anteile 12 und 13 entgegengesetzt ist. Der Anteil 11 ist das thermoempfindliche erste Sensorelement. Dementsprechend ist dieser Anteil 11 im Spiegel 12 so angeordnet, dass er sich wenigstens im wesentlichen in dessen Brennpunkt befindet. Die dem Anteil 11 benachbarten Anteile 12 und 13 liegen dann entsprechend ausserhalb des Fokus des Spiegels 2. Die mit dem Pfeil 1 angedeutete Längsachse der Folie 31 ist bei den Spiegeln, die im Verhältnis zu ihrem Durchmesser tief sind, in Richtung der optischen Achse a (siehe Fig. 1) ausgerichtet. Auf diese Weise wird die optimale Unempfindlichkeit des erfindungsgemässen Pyrodetektors gegen ausserhalb des Richtungsbereiches einfallende Wärmestrahlung erzielt, weil damit im wesentlichen nur am Spiegel reflektierte Strahlung auf den Sensor 3 trifft. Diese in der Fig. 1 dargestellte Ausrichtung hat ausserdem auch noch den Vorzug, dass die in den Spiegel einfallende Strahlung von zwei Seiten auf bzw. in den Sensor 3 gelangen kann, womit die höhere Messempfindlichkeit und eine geringere Zeitkonstante erreicht ist.

Als Material für die Folie des Sensors 3 bzw. für die Sensorelemente 11, 12 und 13 eignen sich insbesondere TGS (Triglyzinsulfat)-Einkristalle, Lithiumtantalat($LiTaO_3$)-Einkristalle, die keramischen Materialien $Pb_{0,88}$, $Bi_{0,08}(Zr_{0,9})Ti_{0,1}O_3$ und vor allem auch $Pb[Ti_{0,02}Zr_{0,88}(FE_{½}Ta_{½})_{0,1}]O_3$ sowie vor allem auch das bereits mehrfach erwähnte $PVF_2$ (PVDF). Die für die Realisierung interessierenden physikalischen Daten sind in der Tabelle angegeben.

Für die angegebenen keramischen Materialien empfiehlt sich die Verwendung von Folien mit einer Dicke von 0,03 bis 0,1 mm. Für $PVF_2$ ist die Verwendung von Folie mit einer Dicke unterhalb 20 µm von Vorteil. Geringe Dicke der Folien begünstigt eine kleine Zeitkonstante infolge nur geringer Wärmekapazität und ermöglicht in einfacher Weise hohen Wärmeableitwiderstand zur Umgebung.

Die Fig. 3 zeigt als Ausführungsbeispiel einen Aufbau eines Sensors 3 mit einer PVDF-Folie 31, die auf einem Rahmen 32 ausgespannt befestigt ist. Da die Folie 31 durchsichtig ist, sind die gestrichelt dargestellten Konturen durch die Folie hindurch an sich sichtbar.

Von der Folie 31 wird vorteilhafterweise nur ein mittlerer Bereich für die bereits oben erwähnten Elemente 11, 12 und 13 benutzt, so dass von diesen Elementen bis zum Innenrand des Rahmens 32 ein reheblicher Abstand vorliegt, in dem die Folie einen erheblich hohen Wärmeableitwiderstand bildet. Die in Fig. 3 nicht näher dargestellten, auf beiden Oberflächenseiten der Folie 31 befindlichen (vorzugsweise durchsichtigen) Elektroden sind auf der jeweiligen Oberflächenseite der Folie über dünne aufgedampfte Leitungsbahnen 33 und 34 (letztere auf der Rückseite der durchsichtigen Folie) elektrisch angeschlossen. Für den Rahmen 32 kann ein mit 35 bezeichneter Ansatz mit zwei Steckerstiften 36 und 37 vorgesehen sein. Die Steckerstifte 36 und 37 können nicht nur zum elektrischen Anschluss des Sensors 3 im Pyrodetektor 1, sondern auch zu dessen Halterung im Spiegel 2 vorgesehen sein.

Fig. 4 zeigt in einer Seitenansicht einen Rahmen 32 nach Fig. 3 mit einer einseitig darauf befindlichen PVDF-Folie 31. In der Darstellung der Fig. 4 besitzt der Rahmen 32 einstückig damit verbundene oder aufgesetzte Rahmen 41 und 42, über die hinweg Folien 43 und 44 aus vorzugsweise Hochdruckpolyäthylen gespannt sind. Diese Folien 43 und 44 dienen dazu, die Folie 31 des Sensors 3 gegen Luftzug von aussen und Beschädigung des ausgebauten Sensors zu schützen. Die Folien 43 und 44 wirken wie die beschriebene Abdeckung 4 und können zusätzlich oder ersatzweise zur Abdeckung 4 vorgesehen sein. Um störende Erwärmung durch Strahlung, ausgehend von dieser Folie 43, 44, zu vermeiden, sollten diese Folien möglichst wenig absorbieren oder es wird bei im Bereich $\lambda < 5$ µm erheblicher Absorption der Folie der Aufbau, z.B. Materialdikke, so gewählt, dass sich für die Anordnung dieser Folien eine die 10 s überragende Zeitkonstante ergibt.

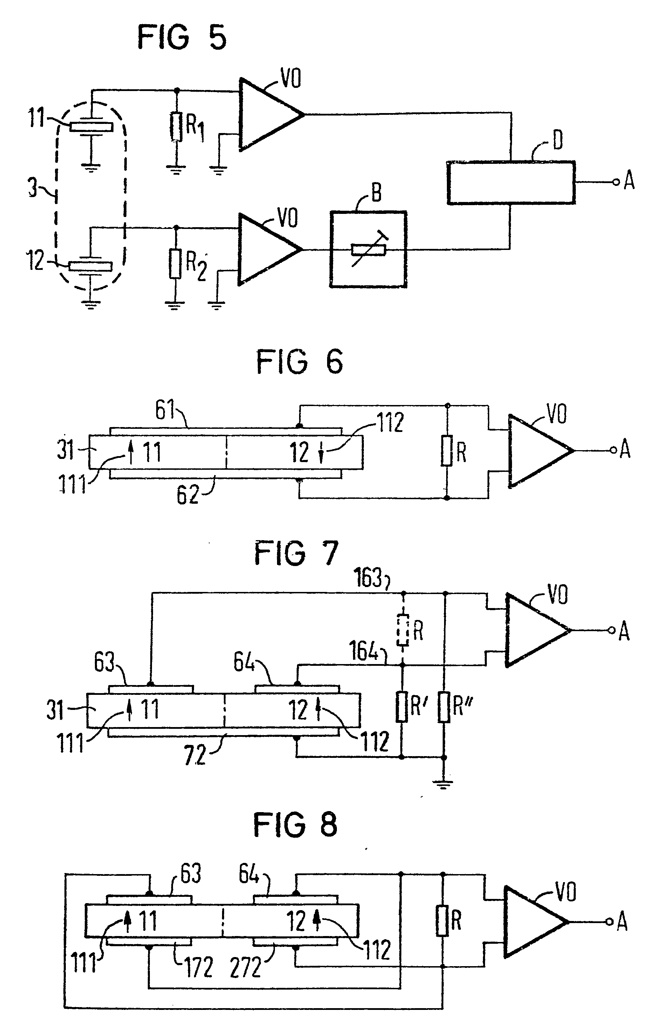

Nachfolgend werden nunmehr Einzelheiten zur elektronischen Schaltung des erfindungsgemässen Pyrodetektors und damit im Zusammenhang stehende, besonders vorteilhafte Anordnungen der Elektroden gegeben. Fig. 5 zeigt ein Prinzipschaltbild der Funktion eines erfindungsgemässen Pyrodetektors. In Fig. 5 besteht der Sensor aus den getrennt dargestellten Elementen 11 und 12, wobei hier das Element 12 die Gesamtheit der ausserhalb des Fokus angeordneten Sensorelemente repräsentiert. Mit $R_1$ und $R_2$ sind die jeweiligen Abschlusswiderstände der Sensorelemente bezeichnet. VO sind Verstärker zur entsprechenden Verstärkung der pyroelektrischen Signale der Elemente 11 und 12. Mit Hilfe eines Bewerters B lassen sich die beiden Ausgangssignale der Verstärker VO aufeinander abgleichen, so dass das von dem die Differenz der beiden verstärkten Signale Schaltungsteil D ein Ausgangssignal an A liefert, das im Ruhebetriebsfall, bei dem kein zu detektierendes Objekt vorliegt, einen Minimalwert bzw. den Wert Null hat.

Wie bereits oben erwähnt, lässt sich gemäss einer Weiterbildung der Erfindung die nach dem Prinzip der Fig. 5 in einem elektronischen Schaltungsteil D gebildete Signaldifferenz durch vorteilhafte Aufteilung der Elektroden und der Polarisation der Folie des Sensors 3 bilden. Diese Massnahme beseitigt Fehler, die auftreten können, wenn hohe Signale eines oder mehrerer Elemente 11 und 12 die Vorverstärker übersteuern und eine nur scheinbare Differenz bilden. Ausserdem wird damit die Totzeit infolge von massiver Übersteuerung durch sensornahe Objekte verhindert.

Fig. 6 zeigt hierzu ein Prinzipschaltbild, bei dem auf der Folie 31 für die Elemente 11 und 12 durchgehende Elektroden 61 und 62 mit der Kapazität $2 \cdot C_x$ mit nur einem dazwischenliegenden Abschlusswiderstand $R = R_x/2$ vorgesehen sind. In den beiden, die Elemente 11 und 12 bildenden Anteilen ist die Polarisation — wie mit den Pfeilen 111, 112 dargestellt— entgegengesetzt gerichtet. Die Bemessung der Flächen bzw. Volumenanteile der Sensorelemente 11 und 12 der Folie 31 ist derart getroffen, d.h. im Regelfall sind die Abmessungen und der Betrag der Polarisationswerte gleich gross, so dass bei Fehlen eines vom erfindungsgemässen Pyrodetektor zu detektierenden entfernten Objekts thermoelektrisches Polarisationsgleichgewicht im Körper 10 besteht und das Ausgangssignal am Abschlusswiderstand gleich Null ist.

Fig. 7 zeigt eine Ausführung mit Reihenschaltung, bei der zwar die rückseitige Elektrode 72 für die beiden, die Sensorelemente 11 und 12 bildenden Anteile durchgehend ist, für die aber für diese Sensorelemente 11 und 12 getrennte Elektroden 63 und 64 auf der oberen Oberfläche vorgesehen sind. An sich würde es genügen, einen einzigen (gestrichelt dargestellten) Abschlusswiderstand $R = 2R_x$ zwischen den Ausgängen 163 und 164 der Elektroden 63 und 64 vorzusehen. Vorteilhafter ist es jedoch, zur Sicherstellung des elektrischen Gleichgewichtes für die beiden Ausgänge 163 und 164 je einen Abschlusswiderstand R' und R'' jeweils = $R_x$ vorzusehen, die — wie in Fig. 7 dargestellt — an ihrem einen Anschluss miteinander und mit der Elektrode 72 verbunden sind. Vorzugsweise liegt diese Verbindung an Masse. Mit VO ist wiederum ein Verstärker und mit A wiederum der Ausgang für das Differenzsignal angegeben.

Für die Bemessung des Abschlusswiderstandes R für das Beispiel der Fig. 6 ist wegen der Parallelschaltung der beiden Sensorelemente 11 und 12 ein vergleichsweise zum Beispiel der Fig. 5 nur halb so grosser Widerstandswert vorzusehen. Für das Beispiel der Fig. 7 gelten die Bemessungen wie beim Beispiel der Fig. 5, d.h. für gleich grosse Zeitkonstante der beiden Sensorelemente 11 und 12 sind bei gleich grosser Kapazität zwischen den Elektroden der einzelnen Elemente 11 und 12 Widerstandswerte R' = R'' = $R_x$ vorzusehen.

Fig. 8 zeigt eine Variante der Fig. 6 mit in beiden Sensorelementen 11 und 12 gleichgerichteter Polarisation und — wie aus der Figur ersichtlich — entgegengesetzt angeschlossenen Elektrodenpaaren 64, 272 und 63, 172. Für die Bemessung des Abschlusswiderstandes R der Fig. 8 gilt das zur Fig. 6 Gesagte.

Bei einem erfindungsgemässen Pyrodetektor liegt, solange kein zu detektierender Körper in den Detektionsbereich gelangt, ein verschwindendes Differenzsignal, d.h. der Signalwert Null, am Ausgang. Dieser Signalwert ist die Differenz zweier, von Null verschiedener Signale, nämlich des ersten Sensorelementes und der Gesamtheit der weiteren Sensorelemente. Gleich grosse Signale beruhen dabei bei einheitlicher Dicke der Folie auf gleich grosser Fläche des ersten Sensorelementes einerseits und der Gesamtheit der weiteren Sensorelemente 12, 13 andererseits. Eine solche Ausführung lässt sich — gegebenenfalls anhand von experimentell bemessenen Mustern — in einfacher Weise auch in der Serienfertigung realisieren. Bei Verwendung getrennter Vorverstärker wie im Schema nach Fig. 5 kann über die konstruktive Bemessung hinaus auch ein elektronischer Abgleich zwischen dem Zweig des ersten Sensorelementes und dem Zweig der weiteren Sensorelemente vorgesehen sein.

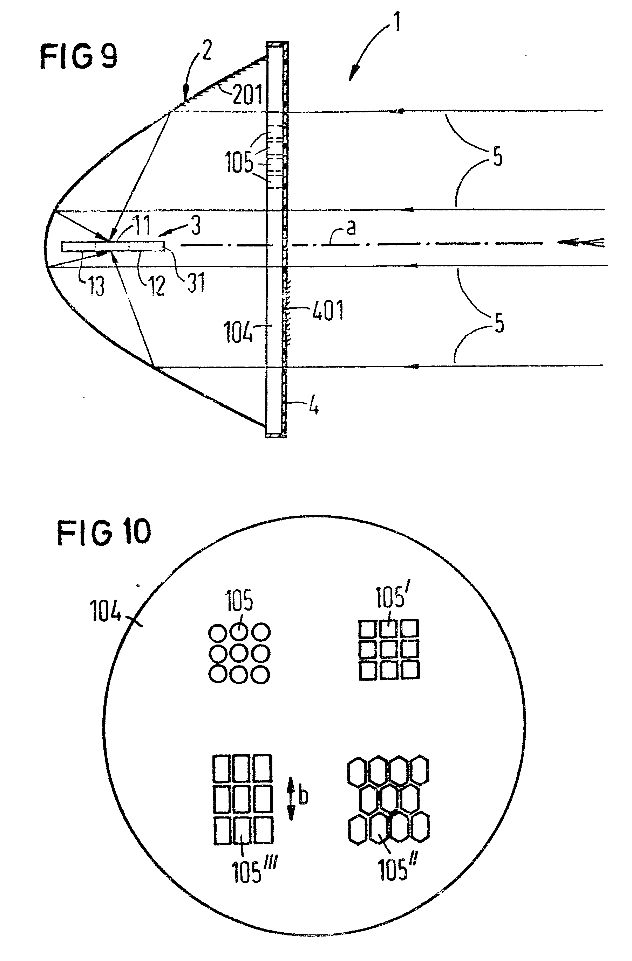

Eine weitere Verbesserung der vorliegenden Erfindung zeigt die Fig. 9. Die Verbesserung besteht darin, nahe der Abdeckung 4 vor dem Spiegel 2 ein Wabengitter 104 mit grossem Durchlassquerschnitt der Löcher 105 einzufügen. Bezüglich der übrigen Einzelheiten dieser Fig. 9 und ihrer Bezugszeichen sei auf die Beschreibung zur Fig. 1 verwiesen. Vorzugsweise ist die gesamte Abdeckung, wie in Fig. 9 dargestellt, so ausgebildet, dass eine dünne Folie aus vorzugsweise Polyäthylen als eigentliche, das Innere des Spiegels 2 gegen Luftzug schützende Abdeckung 4 vorgesehen ist, die über den Körper des Wabengitters 104 gespannt ist. Das Wabengitter 104 dient damit als mechanisches Unterstützungsmittel für die an sich mechanisch empfindliche Folie.

Von besonderem Vorteil ist es, die Wände des Wabengitters 104, und zwar eingeschlossen die Wände seiner Löcher 105, mit einer Metallschicht zu versehen und elektrisch leitend mit dem Massepol des Gerätes zu verbinden. Es wird damit eine gute elektrische Abschirmung des Innern des Hohlspiegels 2 erreicht, ohne dass diese elektrisch abschirmende Metallisierung irgendeine Dämpfung der gewollten Strahlungsempfindlichkeit des erfindungsgemässen Pyrodetektors bewirken könnte. Auch bringt es Vorteile, die Wände der Löcher 105 des Wabengitters 104 derart zu schwärzen, dass Reflexionen seitlich einfallender unerwünschter Strahlung noch im Wabengitter 4 absorbiert werden. Diese (zusätzliche) Strahlungsabsorption hat bei dem erfindungsgemässen Pyrodetektor gerade deshalb keine nachteilige Auswirkung, weil dieser Pyrodetektor für Wärmestrahlung aus dem Bereich der Abdeckung 4 und damit auch aus dem Bereich des Wabengitters 104 — Abdeckung 4 und Wabengitter 104 befinden sich praktisch am gleichen Ort bezüglich des Spiegels 2 und seines Innern — in höchstem Masse unempfindlich ist.

Die Fig. 10 zeigt eine Aufsicht auf den Körper des Wabengitters 104, gesehen parallel der Detektionsrichtung, d.h. gesehen aus der Richtung des in der Fig. 9 gefiederten Pfeiles. Die ganze Querschnittsfläche des Wabengitters 104 — soweit sie die Öffnung des Spiegels 2 überdeckt — hat Löcher, wie mit 105 oder 105', ... , 105''' bezeichnet. Das Wabengitter 104 hat einen möglichst grossen Durchlassquerschnitt von wenigstens 80%, und das Verhältnis von Tiefe zu maximalem Durchmesser der Löcher 105 beträgt 1:1 bis 5:1. In der Fig. 10 sind innerhalb der Fläche des dargestellten Wabengitters 104 vier Gruppen verschieden geformter Löcher 105 bis 105''' dargestellt. Die Löcher können rund, viereckig, sechseckig und dergleichen sein, wenn nur die zwischen den Löchern 105 befindlichen Stege genügend schmal sind, um den grossen Durchlassquerschnitt zu erreichen. Entsprechend dem Verhältnis Tiefe zu Durchmesser wirken die Löcher bzw. das ganze Wabengitter 104 stark absorbiert auf solche Strahlung, die schräg, d.h. aus anderer als der Detektionsrichtung, auf den erfindungsgemässen Pyrodetektor trifft.

Aufgrund der vorliegenden Erfindung, nämlich der Kompensationswirkung für von der Abdeckung 4 herrührender, in das Spiegelinnere eintretender Wärmestrahlung ergibt sich keine nachteilige Auswirkung, selbst wenn im Wabengitter 104 sehr hohe Intensität schräg einfallender Strahlung absorbiert wird. Auch bei einem solchen Umstand kann mit einem wie erfindungsgemässen Pyrodetektor auch noch ein in grösserer Entfernung in die Detektionsrichtung eintretender Körper einwandfrei und fehlersicher detektiert werden, selbst wenn seine Wärmestrahlung vergleichsweise intensitätsschwach ist.

Darüber hinaus lässt sich aber mit einem wie vorgesehenen Wabengitter 104 noch ein weiterer Vorteil erreichen, nämlich dann, wenn man die Oberfläche des Wabengitters 104 bzw. der Löcher 105, 105', 105'', 105''' metallisiert (oder das ganze Wabengitter 104 aus Metall besteht) und diese Metallisierung mit der Gerätemasse leitend verbindet. Ein wie erfindungsgemässer Pyrodetektor spricht ebenso wie andere bekannte Pyrodetektoren mit vergleichbarem Sensormaterial relativ leicht auf in der Nähe befindliche elektrische Aufladungen an. Diese Aufladungen können z.B. solche der mehr oder weniger aus Kunststoff bestehenden Kleidung in der Nähe befindlicher Personen sein, die nicht und schon gar nicht aufgrund ihrer elektrischen Felder detektiert werden sollen.

Es kann von Vorteil sein, die Wabenlöcher rechteckig, länglich oder rhombisch, wie ebenfalls in Fig. 3 als Beispiel dargestellt, zu machen und den mit einem solchen Wabengitter 104 ausgerüsteten Pyrodetektor so aufzustellen, dass die Längsrichtung b der länglichen Löcher senkrecht ist, nämlich parallel der Stellung eines aufrecht stehenden bzw. gehenden Menschen ist. Der erfindungsgemässe Pyrodetektor erhält dadurch zusätzlich eine asymmetrische Richtcharakteristik, mit der er bevorzugt auf aufrecht gehende Menschen anspricht.

Ein Wabengitter 104 ist vorteilhafterweise ein Kunststoffspritz- oder -presskörper, der vorzugsweise oberflächlich metallisiert und gefärbt ist.

Der Vollständigkeit halber sei noch darauf hingewiesen, dass der verwendete Begriff Wabengitter ersichtlich keine bestimmte Querschnittsform — und somit auch nicht Bienenwabenform — der Löcher voraussetzt, sondern vor allem auf relativ tiefe Löcher des Gitters — etwa im Gegensatz zu einem (Draht)sieb — hinweisen soll. Für ganz anderen Zweck ist der Begriff Wabengitter in ähnlich breit verstandenem Sinne für Hochfrequenzabschirmungen üblich.

**Patentansprüche**

1. Pyrodetektor zur Detektion eines in dessen Detektionsbereich eintretenden Körpers, der eine von seiner Umgebung abweichende Temperatur besitzt; mit einem Holspiegel zur Fokussierung der von diesem Körper ausgehenden Wärmestrahlung, mit einem ersten, im Fokus des Spiegels angebrachten Sensorelement, mit wenigstens einem weiteren, benachbart dem ersten Sensorelement, jedoch ausserhalb des Fokus des vorgegebenen Richtungsbereichs im Spiegel angeordneten weiteren Sensorelement zur Kompensation von Umgebungseinflüssen, mit einer für die einfallende Strahlung durchlässigen, nahe dem Spiegel im Richtungsbereich des Detektors angebrachten Abdeckung, und mit einer Einrichtung zur Differenzbildung zwischen dem Ausgangssignal des ersten und des einen bzw. der mehreren weiteren Sensorelemente, und wobei für das erste und die weiteren Sensorelemente eine Folie aus ein und demselben elektrisch nichtleitenden Material mit permanenter Orientierungspolarisation und mit darauf befindlichen Elektroden vorgesehen ist, gekennzeichnet dadurch,

dass diese Sensorelemente (11, 12, 13) nur einen mittleren Flächenbereich dieser Folie (31) einnehmen und diese Folie (31) an ihren Rändern in einem Rahmen (32) gehalten ist, so dass alle Sensorelemente gleiche Zeitkonstante ihrer Aufheizzeit haben;

dass diese Folie (31) mit den Sensorelementen (11, 12, 13) in dem Spiegel (2) so angeordnet ist, dass ein Strahlungseinfall im Spiegel (2) reflektierter Strahlung auf beiden Oberflächenseiten der Folie (31) vorliegt;

dass der Spiegel ein parabolischer Spiegel ist, der so bemessen ist, dass sein Fokus in der inneren Hälfte des Spiegels (2) liegt;

dass die Folie mit den Sensorelementen (11, 12, 13) derart im Spiegel (2) angeordnet ist, dass die optische Achse (a) des Spiegels (2) in der Ebene dieser Folie (31) liegt (Fig. 1), so dass die Sensorelemente (11, 12, 13) im wesentlichen nur von einer solchen Strahlung (5) des in grösserer Entfernung befindlichen, zu detektierenden Körpers getroffen wird, die im Spiegel (2) reflektiert worden ist (Fig. 1);

dass nur ein Sensorelement (11) im Fokus dieses Spiegels (2) und ein oder mehrere weitere Sensorelemente (12, 13) ausserhalb der Fokusebene des Spiegels (2) angeordnet sind (Fig. 1), so dass dieses (diese) weitere(n) Sensorelement(e) (12, 13) in gleichem Masse wie das erste, im Fokus angebrachte Sensorelement (11) der von der Abdeckung (4) selbst ausgehenden Wärmestrahlung ausgesetzt ist (sind), und

dass die Elektroden (61, 62, 63, 64) aller Sensorelemente (11, 12, 13) paarweise mit einer elektrischen Auswerteschaltung (Fig. 5) verbunden sind, wobei die Elektrodenpaare mit einem Widerstand (R) abgeschlossen sind, so dass für alle Elektrodenpaare die Zeitkonstante (K) der Abklingzeit

$$R_x \cdot C_x = K$$

gilt, worin jeweils $C_x$ die Kapazität des aus dem jeweiligen Elektrodenpaar gebildeten Kondensators und $R_x$ der jeweilige Abschlusswiderstand zu diesem Elektrodenpaar ist, und K kleiner als 10 s bemessen ist.

2. Pyrodetektor nach dem Anspruch 1, gekennzeichnet dadurch, dass auf beiden Seiten der Folie (31) je eine durchgehende Elektrode vorgesehen ist und die Polarisationsrichtung (111) in dem das erste Sensorelement (11) bildenden Anteil der Folie (31) entgegengesetzt gerichtet ist zur Richtung der Polarisation (112) des das weitere Sensorelement (12) bildenden Anteils der Folie (31) und ein gemeinsamer Ausgangswiderstand (R) vorgesehen ist (Fig. 6).

3. Pyrodetektor nach einem der beiden Ansprüche 1 oder 2, gekennzeichnet dadurch, dass auf der einen Seite der Folie (31) eine durchgehende Elektrode (72) und auf der anderen gegenüberliegenden Seite eine Elektrode (63) für das erste Sensorelement und elektrisch davon getrennt eine Elektrode (64) für das eine oder die mehreren weiteren Sensorelemente (12, 13) vorgesehen sind, dass zwischen diesen beiden Elektroden (63, 64) dieser anderen Seite der Folie (31) der Abschlusswiderstand (R) angeschlossen ist, und dass die Polarisationsrichtungen (111, 112) in den Bereichen des ersten Sensorelements (11) und der weiteren Sensorelemente (12, 13) zueinander gleichgerichtet sind (Fig. 7).

4. Pyrodetektor nach dem Anspruch 3, gekennzeichnet dadurch, dass der Abschlusswiderstand (R) in zwei hintereinandergeschaltete Widerstände (R' und R'') aufgeteilt ist und die Mittelanzapfung zwischen diesen Widerständen mit der durchgehenden Elektrode (72) der einen Seite elektrisch verbunden ist.

5. Pyrodetektor nach einem der Ansprüche 1 bis 4, gekennzeichnet dadurch, dass auf beiden Seiten der Folie (31) je eine Elektrode (63, 172) des ersten Sensorelements (11) und jeweils elektrisch davon getrennt je eine Elektrode (64, 72) der weiteren Sensorelemente (12, 13) vorgesehen sind, dass jeweils die Elektrode (63) der einen Seite des ersten Sensorelements (11) mit der Elektrode (272) der anderen Seite des weiteren Sensorelements (12) zu einem ersten Anschluss verbunden sind, dass die Elektrode (64) der einen Seite des weiteren Sensorelements (12) mit der Elektrode (172) der anderen Seite des ersten Sensorelements beim zweiten Anschluss elektrisch verbunden sind, dass zwischen diesen Anschlüssen der Abschlusswiderstand (R) angeschlossen ist, und dass die Polarisationsrichtung (111) im Bereich des ersten Sensorelements entgegengesetzt gerichtet ist zur Polarisationsrichtung (112) im Bereich der weiteren Sensorelemente (12, 13) (Fig. 8).

6. Pyrodetektor nach einem des Ansprüche 1 bis 5, gekennzeichnet dadurch, dass eine Folie (31) aus Polyvinylidendifluorid (PVDF) verwendet ist.

7. Pyrodetektor nach einem der Ansprüche 1 bis 5, gekennzeichnet dadurch, dass für die Folie (31) ferroelektrische Keramik verwendet ist.

8. Pyrodetektor nach einem der Ansprüche 1 bis 7, gekennzeichnet dadurch, dass die Sensorelemente (11, 12, 13) beidseitig in im Abstand von der Folie (31) angebrachte Abdeckungen (43, 44) eingeschlossen sind.

9. Pyrodetektor nach dem Anspruch 8, gekennzeichnet dadurch, dass die Abdeckungen (43, 44) strahlungsdurchlässig sind.

10. Pyrodetektor nach einem der Ansprüche 1 bis 9, gekennzeichnet dadurch, dass die Abdeckung (4) des Spiegels (2) eine Aufrauhung der Oberfläche hat, deren Rauhtiefe zu Streuung von Strahlung führt, die kurzwelliger als ca. 5 µm ist.

11. Pyrodetektor nach einem der Ansprüche 1 bis 10, gekennzeichnet dadurch, dass die spiegelnde Oberfläche des Spiegels (2) eine Aufrauhung (201) aufweist, deren Rauhtiefe zu Streuung von Strahlung führt, die kurzwelliger als ca. 5 µm ist.

12. Pyrodetektor nach einem der Ansprüche 1 bis 11, gekennzeichnet dadurch, dass nahe der Abdeckung (4) vor dem Spiegel (2) ein Wabengitter (104) mit grossem Durchlassquerschnitt der Löcher (105) eingefügt ist.

13. Pyrodetektor nach dem Anspruch 12, gekennzeichnet dadurch, dass das Verhältnis von Lochtiefe zu maximaler linearer Öffnungsabmessung (Durchmesser) 1:1 bis 5:1 beträgt.

14. Pyrodetektor nach einem der beiden Ansprüche 12 oder 13, gekennzeichnet dadurch, dass als Abdeckung (4) eine dünne Folie verwendet ist, die über das, als Stütze wirkende Wabengitter gespannt ist.

15. Pyrodetektor nach einem der drei Ansprüche 12, 13 oder 14, gekennzeichnet dadurch, dass die Wände der Löcher (105) des Wabengitters (104) metallisiert sind und elektrisch leitend mit der Gerätemasse verbunden sind.

16. Pyrodetektor nach einem der Ansprüche 12 bis 15, gekennzeichnet dadurch, dass die Wände der Löcher (105) des Wabengitters (104) geschwärzt sind.

17. Pyrodetektor nach einem der Ansprüche 12 bis 16, gekennzeichnet dadurch, dass das Wabengitter aus Metall besteht.

18. Pyrodetektor nach einem der Ansprüche 12 bis 16, gekennzeichnet dadurch, dass das Wabengitter (104) aus einem gespritzten oder gepressten Kunststoff besteht und das Gitter (104) mit einer Metallisierungsschicht überzogen ist.

19. Pyrodetektor nach einem der Ansprüche 12 bis 18, gekennzeichnet dadurch, dass die Löcher (105) in einer Richtung länglich sind.

**Revendications**

1. Appareil détecteur pyro-électrique pour la détection d'un corps qui pénètre dans sa plage de détection et qui possède une température différente de celle de son environnement, ledit appareil comportant un miroir creux pour focaliser le rayonnement thermique provenant de ce corps, un premier élément détecteur disposé au foyer du miroir, au moins un autre élément détecteur, voisin du premier élément détecteur mais disposé dans le miroir à l'extérieur du foyer de la plage directionnelle prédéterminée, pour la compensation d'influences de l'environnement, un couvercle qui est transparent pour le rayonnement incident et qui est disposé au voisinage du miroir dans la plage directionnelle de l'appareil détecteur, et un dispositif pour former la différence entre le signal de sortie du premier élément détecteur et de l'autre ou des autres éléments détecteurs, une feuille constituée par un seul et même matériau non conducteur du point de vue électrique et présentant une polarisation d'orientation permanente et sur laquelle se trouvent des électrodes étant prévue pour le premier et les autres éléments détecteurs, caractérisé par le fait:

que les éléments détecteurs (11, 12, 13) n'occupent qu'une région superficielle centrale de cette feuille (31) et que cette feuille (31) est maintenue au niveau de ses bords dans un cadre (32), de sorte que tous les éléments détecteurs ont la même constante de temps de réchauffement;

que cette feuille (31), avec les éléments détecteurs (11, 12, 13), est disposée dans le miroir (2) de manière qu'un rayonnement réfléchi dans le miroir (2) arrive sur les deux côtés de la surface de la feuille (31);

que le miroir est un miroir parabolique, dimensionné de manière que son foyer se trouve dans la moitié intérieure du miroir (2);

que la feuille avec les éléments détecteurs (11, 12, 13) est disposée dans le miroir (2) de manière que l'axe optique (a) du miroir (2) se trouve dans le plan de cette feuille (31) (fig. 1), de sorte que les éléments détecteurs (11, 12, 13) ne reçoivent sensiblement qu'un rayonnement (5), provenant du corps à détecter qui se trouve à une distance plus importante, qui a été réfléchi dans le miroir (2) (fig. 1);

qu'un seul élément détecteur (11) se trouve au foyer de ce miroir (2) et qu'un ou plusieurs autres éléments détecteurs (12, 13) sont disposés à l'extérieur du plan du foyer du miroir (2) (fig. 1), de sorte que cet (ou ces) autre(s) élément(s) détecteur(s) (12, 13) est (sont) exposé(s), dans la même mesure que le premier élément détecteur (11) disposé au foyer, au rayonnement thermique provenant lui-même du couvercle (4), et

que les électrodes (61, 62, 63, 64) de tous les éléments détecteurs (11, 12, 13) sont reliées par paire à un circuit d'évaluation électrique (fig. 5), les paires d'électrodes étant fermées par une résistance (R) de manière à obtenir pour toutes les paires d'électrodes la constante de temps (K) d'amortissement

$$R_x \cdot C_x = K$$

dans laquelle $C_x$ représente respectivement la capacité du condensateur formé par la paire d'électrodes respective, $R_x$ représente la résistance de fermeture respective pour cette paire d'électrodes, et K est inférieur à 10 s.

2. Appareil détecteur pyro-électrique suivant la revendication 1, caractérisé par le fait qu'une électrode d'un seul tenant est prévue des deux côtés de la feuille (31), que la direction de polarisation (111), dans la partie de la feuille (31) qui constitue le premier élément détecteur (11), est opposée à la direction de polarisation (112) de la partie de la feuille (31) qui constitue l'autre élément détecteur (12), et qu'une résistance de sortie commune (R) est prévue (fig. 6).

3. Appareil détecteur pyro-électrique suivant l'une des revendications 1 ou 2, caractérisé par le fait qu'une électrode d'un seul tenant (72) est prévue d'un côté de la feuille (31), que, de l'autre côté de la feuille, sont prévues une électrode (63) pour le premier élément détecteur et, de façon isolée du point de vue électrique, une électrode (64) pour l'autre ou les autres éléments détecteurs (12, 13), que la résistance de fermeture (R) est raccordée entre ces deux électrodes (63, 64) de cet autre côté de la feuille (31), et que les directions de polarisation (111, 112) sont identiques dans les régions du premier élément détecteur (11) et des autres éléments détecteurs (12, 13) (fig. 7).

4. Appareil détecteur pyro-électrique suivant la revendication 3, caractérisé par le fait que la résistance de fermeture (R) est subdivisée en deux résistances (R' et R'') montées l'une derrière l'autre et que la prise centrale entre ces deux résistances est reliée électriquement à l'électrode d'un seul tenant (72) disposée du premier côté.

5. Appareil détecteur pyro-électrique suivant l'une des revendications 1 à 4, caractérisé par le fait que, des deux côtés de la feuille (31), sont respectivement prévues une électrode (63, 172) du premier élément détecteur (11) et, de façon respectivement isolée du point de vue électrique, une électrode (64, 72) des autres éléments détecteurs (12, 13), que l'électrode (63) d'un premier côté du premier élément détecteur (11) et l'électrode (272) de l'autre côté de l'autre élément détecteur (12) sont respectivement reliées à une première borne, que l'électrode (64) du premier côté de l'autre élément détecteur (12) et l'électrode (172) de l'autre côté du premier élément détecteur sont respectivement reliées électriquement à une seconde borne, que la résistance de fermeture (R) est branchée entre ces bornes, et que la direction de polarisation (111) dans la région du premier élément détecteur est opposée à la direction de polarisation (112) dans la région des autres éléments détecteurs (12, 13) (fig. 8).

6. Appareil détecteur pyro-électrique suivant l'une des revendications 1 à 5, caractérisé par le fait qu'on utilise une feuille (31) en difluorure de poly-vinylidène (PVDF).

7. Appareil détecteur pyro-électrique suivant l'une des revendications 1 à 5, caractérisé par le fait qu'on utilise une céramique ferro-électrique pour la feuille (31).

8. Appareil détecteur pyro-électrique suivant l'une des revendications 1 à 7, caractérisé par le fait que les éléments détecteurs (11, 12, 13) sont enfermés de deux côtés par des couvercles (43, 44) disposés à une certaine distance de la feuille (31).

9. Appareil détecteur pyro-électrique suivant la revendication 8, caractérisé par le fait que les couvercles (43, 44) sont perméables au rayonnement.

10. Appareil détecteur pyro-électrique suivant l'une des revendications 1 à 9, caractérisé par le fait que le couvercle (4) du miroir (2) présente une rugosité de surface, dont la profondeur de rugosité conduit à la dispersion du rayonnement dont la longueur d'ondes est inférieure à environ 5 μm.

11. Appareil détecteur pyro-électrique suivant l'une des revendications 1 à 10, caractérisé par le fait que la surface réfléchissante du miroir (2) présente une rugosité (201) dont la profondeur de rugosité conduit à la dispersion du rayonnement dont la longueur d'ondes est inférieure à environ 5 μm.

12. Appareil détecteur pyro-électrique suivant l'une des revendications 1 à 11, caractérisé par le fait qu'au voisinage du couvercle (4), devant le miroir (2), est insérée une grille alvéolée (104) dont la section transversale de passage des trous (105) est importante.

13. Appareil détecteur pyro-électrique suivant la revendication 12, caractérisé par le fait que le rapport de la profondeur des trous à la dimension d'ouverture linéaire maximale (diamètre) est compris entre 1/1 et 5/1.

14. Appareil détecteur pyro-électrique suivant l'une des revendications 12 ou 13, caractérisé par le fait qu'en tant que couvercle (4), on utilise une feuille mince qui est tendue sur la grille alvéolée servant de support.

15. Appareil détecteur pyro-électrique suivant l'une des revendications 12, 13 ou 14, caractérisé par le fait que les parois des trous (105) de la grille alvéolée (104) sont métallisées et sont reliées de façon conductrice du point de vue électrique à la masse de l'appareil.

16. Appareil détecteur pyro-électrique suivant l'une des revendications 12 à 15, caractérisé par le fait que les parois des trous (105) de la grille alvéolée (104) sont noircies.

17. Appareil détecteur pyro-électrique suivant l'une des revendications 12 à 16, caractérisé par le fait que la grille alvéolée est constituée par un métal.

18. Appareil détecteur pyro-électrique suivant l'une des revendications 12 à 16, caractérisé par le fait que la grille alvéolée (104) est constituée par une matière synthétique coulée par injection ou moulée sous pression et que la grille (104) est recouverte d'une couche de métallisation.

19. Appareil détecteur pyro-électrique suivant l'une des revendications 12 à 18, caractérisé par le fait que les trous (105) sont allongés suivant une direction.

## Claims

1. A pyro-detector for the detection of any body possessing a temperature which differs from its environment and which enters the detection field of the detector, comprising a concave reflector which serves to focus heat radiation from said body, a first sensor element arranged in the focus of the reflector, at least one further sensor element arranged adjacent to the first sensor element yet outside of the focus of the given direction field in the reflector, and which serves to compensate environmental influences, a cover permeable to the incident radiation close to the reflector in the direction field of the detector, and a device which serves to form the difference between the output signal of the first sensor element and of the one or more further sensor elements, and wherein the first and further sensor elements are all composed of a foil of the same electrically non-conductive material having a permanent orientation polarisation and electrodes arranged upon it, characterised in that:

these sensor elements (11, 12, 13) occupy only a central zone of this foil (31) which is held at its edges in a frame (32) so that the heating time of all the sensor elements possess the same time constant;

this foil (31), together with the sensor elements (11, 12, 13), is arranged in the reflector (2) in such manner that reflected radiation entering the reflector (2) appears on both surfaces of the foil (31);

the reflector is a parabolic reflector designed such that its focus lies in the inner half of the reflector (2);

the foil, together with the sensor elements (11, 12, 13), is so arranged in the reflector (2) that the optical axis (a) of the reflector (2) lies in the plane of this foil (31) (fig. 1) and the sensor elements (11, 12, 13) are fundamentally influenced only by that radiation (5) of the remote body to be detected which has been reflected by the reflector (2) (fig. 1);

only one sensor element (11) is arranged in the focus of this reflector (2) and the one or more further sensor elements (12, 13) is or are arranged outside of the focus plane of the reflector (2) (fig. 1), so that the or each further sensor element (12, 13) is (or are) exposed to the same extent as the first sensor element (11) arranged within the focus to the heat radiation emanating from the cover (4) itself, and

the elctrodes (61, 62, 63, 64) of all the sensor elements (11, 12, 13) connected in pairs to an electric analysis circuit (fig. 5) in which electrode pairs are terminated by a resistor (R) so that all the electrode pairs are governed by the time constant (K) with a fade-out of

$$R_x \cdot C_x = K$$

wherein $C_x$ represents the capacitance formed by the pair of electrodes in question, $R_x$ represents the terminating resistance of this electrode pair, and K is contrived to be less than 10 s.

2. A pyro-detector as claimed in claim 1, characterised in that there is a continuous electrode on each side of the foil (31), the polarisation direction (111), in that part of the foil (31) which forms the first sensor element (11), is opposed to the direction of polarisation (112) of that part of the foil (31) which forms a further sensor element (12) and a common output resistor (R) is provided (fig. 6).

3. A pyro-detector as claimed in claim 1 or 2, characterised in that a continuous electrode (72) is arranged on one face of the foil (31) and on the other face there is arranged an electrode (63) for the first sensor element electrically isolated from any electrode (64) for a further sensor element (12, 13), the terminal resistor (R) being connected between these two electrodes (63, 64) on this other side of the foil (31), and that the polarisation directions (111, 112) in the regions of the first sensor element (11) and the further sensor elements (12, 13) are mutually identical (fig. 7).

4. A pyro-detector as claimed in claim 3, characterised in that the terminal resistor (R) is divided into two series connected resistors (R' and R'') and the central junction between these resistors is electrically connected to the continuous electrode (72) on the first side.

5. A pyro-detector as claimed in one of the claims 1 to 4, characterised in that on both sides of the foil (31) there is arranged one electrode (63, 172) of the first sensor element (11) electrically isolated from an electrod (64, 72) of the or each further sensor element (12, 13), that the electrode (63) on the one side of the first sensor element (11) is connected to the electrode (272) of a further sensor element (12) on the other side to form a first terminal, the electrode (64) on the one side of the further sensor element (12) being electrically connected to the electrode (172) on the other side of the first sensor element to form a second terminal, the terminal resistor (R) being connected between these terminals, and the polarisation direction (111) in the region of the first sensor element being opposed to the polarisation direction (112) in the region of the further sensor elements (12, 13) (fig. 8).

6. A pyro-detector as claimed in one of the claims 1 to 5, characterised in that the foil (31) is composed of polyvinylidenedifluoride (PVDF).

7. A pyro-detector as claimed in one of the claims 1 to 5, characterised in that the foil (31) is a ferro-electric ceramic.

8. A pyro-detector as claimed in one of the claims 1 to 7, characterised in that the sensor elements (11, 12, 13) are enclosed on both sides by covers (43, 44) arranged at a distance from the foil (31).

9. A pyro-detector as claimed in claim 8, characterised in that the covers (43, 44) are radiation-permeable.

10. A pyro-detector as claimed in one of the claims 1 to 9, characterised in that the cover (4) of the reflector (2) has a roughened surface where the depth of roughness leads to a radiation scatter for any wavelength shorter than approximately 5 μm.

11. A pyro-detector as claimed in one of the claims 1 to 10, characterised in that the reflective surface of the reflector (2) exhibits a roughening (201) whose roughness depth leads to a radiation scatter in which the wavelength is shorter than approximately 5 μm.

12. A pyro-detector as claimed in one of the claims 1 to 11, characterised in that close to the cover (4) preceding the reflector (2) there is arranged a honeycomb grid (104) in which the holes (105) possess a large filter cross-section.

13. A pyro-detector as claimed in claim 12, characterised in that the ratio of whole depth to maximum linear opening dimensions (diameter) is from 1/1 to 5/1.

14. A pyro-detector as claimed in claim 12 or 13, characterised in that the cover (4) consists of a thin foil stretched over the honeycomb grid which itself serves as a support.

15. A pyro-detector as claimed in claim 12, 13 or 14, characterised in that the walls of the holes (105) of the honeycomb grid (104) are metallised and electrically conductively connected to an electrical earth point.

16. A pyro-detector as claimed in one of the claims 12 to 15, characterised in that the walls of the holes (105) of the honeycomb grid (104) are blackened.

17. A pyro-detector as claimed in one of the claims 12 or 16, characterised in that the honeycomb grid consists of metal.

18. A pyro-detector as claimed in one of the claims 12 to 16, characterised in that the honeycomb grid (104) consists of extruded or pressed synthetic material and the grid (104) is coated with a metallisation layer.

19. A pyro-detector as claimed in one of the claims 12 to 18, characterised in that the holes (105) are elongate in one direction.

## FIG 1

## FIG 2

# FIG 3

# FIG 4

# FIG 5

# FIG 6

# FIG 7

# FIG 8

FIG 9

FIG 10